(19) Europäisches Patentamt
European Patent Office
Office européen des brevets

(11) **EP 3 051 900 A1**

(12) **EUROPEAN PATENT APPLICATION**
published in accordance with Art. 153(4) EPC

(43) Date of publication:
**03.08.2016 Bulletin 2016/31**

(51) Int Cl.:
*H04W 72/04* (2009.01)   *H04B 7/04* (2006.01)
*H04J 99/00* (2009.01)   *H04W 28/18* (2009.01)
*H04W 88/04* (2009.01)

(21) Application number: **14847744.1**

(22) Date of filing: **22.08.2014**

(86) International application number:
**PCT/JP2014/071984**

(87) International publication number:
**WO 2015/045697 (02.04.2015 Gazette 2015/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.09.2013 JP 2013200607**

(71) Applicant: **NTT DOCOMO, INC.**
**Chiyoda-ku**
**Tokyo 100-6150 (JP)**

(72) Inventors:
• **KAKISHIMA, Yuichi**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **WIRELESS COMMUNICATION DEVICE, CHANNEL ESTIMATION METHOD, AND SIGNAL RELAY METHOD**

(57)   A radio communication apparatus in a TDD (Time Division Duplex) system includes a notification unit configured to notify a destination radio communication apparatus of information about a signal to be relayed by the destination radio communication apparatus and a resource to be used by the destination radio communication apparatus to relay the signal; a transmission unit configured to transmit the signal to be relayed by the destination communication apparatus; a reception unit configured to receive the signal relayed by the destination communication apparatus; and a channel estimation unit configured to estimate a channel based on the signal relayed by the destination communication apparatus.

FIG.2

## Description

## TECHNICAL FIELD

The present invention relates to a radio communication apparatus, a channel estimation method, and a signal relay method.

## BACKGROUND ART

In 3GPP (Third Generation Partnership Project) standardization, Release 8 to Release 11, a horizontal beamforming scheme has been adopted assuming that APs (antenna ports) are arranged in the lateral direction in a base station.

In 3GPP standardization, Release 12, a 3D-MIMO (Three Dimensional Multiple Input Multiple Output) scheme is under discussion in which a plurality of antenna elements are arranged two-dimensionally in the lateral and longitudinal directions in a base station to form beams in the vertical direction in addition to in the horizontal direction. By forming beams in the vertical and horizontal directions, improvement of system performance can be expected.

In 3GPP standardization, a 3D-MIMO scheme with 8 antenna ports or less is referred to as a "horizontal beamforming" scheme and a 3D-MIMO scheme with more than 8 antenna ports (for example, 16, 32, or 64 antenna ports) is referred to as an "FD-MIMO (Full Dimension-MIMO)" scheme. An FD-MIMO scheme is often referred to as a "Massive MIMO" scheme.

A Massive MIMO scheme can improve frequency usage efficiency by forming sharp beams using excessively large number of antenna elements in a base station.

## DISCLOSURE OF INVENTION

[PROBLEM(S) TO BE SOLVED BY THE INVENTION]

In an MIMO system such as a Massive MIMO scheme, it is necessary to accurately identify a downlink channel matrix in order to form appropriate beams in downlink, for example.

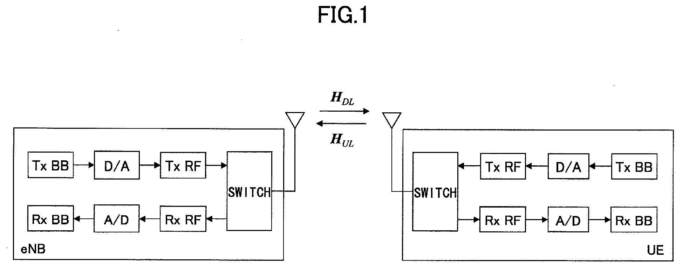

Typically, in a TDD (Time Division Duplex) system, it is known that uplink and downlink channels have duality. The duality of channels means that there is a transposition relationship between an uplink channel matrix and a downlink channel matrix. Fig. 1 shows a typical configuration of a TDD system. When an uplink channel matrix is expressed as $H_{UL}$ and a downlink channel matrix is expressed as $H_{DL}$, there is ideally a relationship $H_{DL}=H_{UL}{}^{T}$.

Thus, it is ideally possible to estimate a downlink propagation path by using an uplink reference signal such as an SRS (Sounding Reference Signal) in a Massive MIMO station. However, because of a difference (herein referred to as "RF mismatch") between RF (Radio Frequency) circuits in an apparatus and so on, the duality is not reliable enough to determine a downlink precoder. For example, as shown in Fig. 1, since there is difference between a circuit from a switch to a reception baseband circuit (RxBB) and a circuit from the switch to a transmission baseband circuit (TxBB), a downlink channel matrix cannot be accurately estimated.

On the other hand, a technique to estimate a downlink channel in a base station by transmitting an uplink reference signal from a mobile station and also non-regeneratively relaying (amplifying and forwarding) a downlink reference signal at the mobile station is proposed (see L. Withers,"Echo-MIMO: A two-say channel training method for matched cooperative beamforming", IEEE Trans. Sig, Spt. 2008). According to this technique, RF mismatch in a base station and a mobile station can be eliminated, and the mobile station need not estimate CSI (Channel State Information), thereby alleviating a workload in the mobile station.

Specifically, a mobile station transmits a reference signal for uplink channel estimation and non-regeneratively relays a received signal for downlink channel estimation. A base station determines an estimated value $H_{UL}$ of an uplink channel matrix and an estimated value $H_{round}$ of a round-trip channel matrix and estimates a downlink channel according to the following equation.

[Equation 1]

$$\hat{\mathbf{H}}_{DL} = \hat{\mathbf{H}}_{UL}^{-1}\hat{\mathbf{H}}_{round}$$

In LTE-Advanced standardization under discussion in 3GPP, signaling for a base station to estimate a round-trip channel matrix and estimate a downlink channel is not defined. In addition, while broadband communication up to 100 MHz is possible according to LTE-Advanced standardization, it is not desirable for a mobile station to non-regeneratively relay signals in a whole system band from the viewpoint of resource usage in the system or power consumption in the mobile station.

It is a general object of the present invention to implement efficient signaling to estimate a round-trip channel matrix in a radio communication apparatus such as a base station.

[MEANS FOR SOLVING THE PROBLEM(S)]

In one aspect of the present invention, there is provided a radio communication apparatus in a TDD (Time Division Duplex) system, including:

a notification unit configured to notify a destination radio communication apparatus of information about a signal to be relayed by the destination radio communication apparatus and a resource to be used by the destination radio communication apparatus to relay the signal;

a transmission unit configured to transmit the signal to be relayed by the destination communication apparatus;

a reception unit configured to receive the signal relayed by the destination communication apparatus; and

a channel estimation unit configured to estimate a channel based on the signal relayed by the destination communication apparatus.

In another aspect of the present invention, there is provided a radio communication apparatus in a TDD (Time Division Duplex) system, including:

a reception unit configured to receive information about a signal to be relayed by the radio communication apparatus and a resource to be used by the radio communication apparatus to relay the signal, and to receive the signal to be relayed by the radio communication apparatus;

a relay unit configured to relay the signal to be relayed by the radio communication apparatus to a transmission unit; and

the transmission unit configured to transmit the relayed signal based on the information about the resource to be used by the radio communication apparatus to relay the signal.

In another aspect of the present invention, there is provided a channel estimation method in a radio communication apparatus in a TDD (Time Division Duplex) system, including the steps of:

notifying a destination radio communication apparatus of information about a signal to be relayed by the destination radio communication apparatus and a resource to be used by the destination radio communication apparatus to relay the signal;

transmitting the signal to be relayed by the destination communication apparatus;

receiving the signal relayed by the destination communication apparatus; and

estimating a channel based on the signal relayed by the destination communication apparatus.

In another aspect of the present invention, there is provided a signal relay method in a radio communication apparatus in a TDD (Time Division Duplex) system, including the steps of:

receiving information about a signal to be relayed by the radio communication apparatus and a resource to be used by the radio communication apparatus to relay the signal, and to receive the signal to be relayed by the radio communication apparatus;

relaying the signal to be relayed by the radio communication apparatus to a transmission circuit; and

transmitting, via the transmission circuit, the relayed signal based on the information about the resource to be used by the radio communication apparatus to relay the signal.

[ADVANTAGEOUS EFFECT OF THE INVENTION]

According to the present invention, it is possible to implement efficient signaling to estimate a round-trip channel matrix in a radio communication apparatus such as a base station.

**BRIEF DESCRIPTION OF THE DRAWINGS**

Fig. 1 shows a typical configuration of a TDD system.
Fig. 2 shows a schematic diagram of a radio communication system in accordance with an embodiment of the present invention.
Fig. 3 shows a block diagram of a base station in accordance with an embodiment of the present invention.
Fig. 4 shows a block diagram of a mobile station in accordance with an embodiment of the present invention.
Fig. 5 shows a schematic diagram illustrating a periodic SRS and an aperiodic SRS.

**DETAILED DESCRIPTION OF THE PREFERRED EMBODIMENTS**

Embodiments of the present invention are described below with reference to the accompanying drawings.

In an embodiment of the present invention, a base station and a mobile station in a TDD-based MIMO system are described below.

<Configuration of communication system>

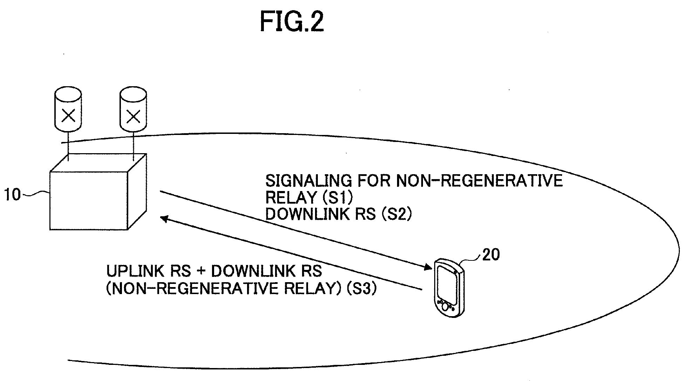

Fig. 2 shows a schematic diagram of a radio communication system in accordance with an embodiment of the present invention. The radio communication system includes a base station 10 and a mobile station 20.

The base station 10 notifies the mobile station 20 of information about a signal to be relayed by the mobile station 20 and a resource to be used by the mobile station 20 to relay the signal (S1). Although the base station 10 need not allocate a signal sequence to the signal to be relayed by the mobile station 20 because the mobile station 20 merely relays the signal, the base station 10 needs to notify the mobile station 20 of which signal should be relayed. In this embodiment, a downlink RS (Reference Signal) is used for explanation as the signal to be relayed by the mobile station 20. However, the signal to be relayed by the mobile station 20 is not limited to the downlink RS, but includes any other signal. In addition, the base station 10 needs to notify the mobile station 20 of which transmission timing or frequency should be used by the mobile station 10 to relay the signal. It should be noted that a frequency to be used by the mobile station 20 to relay the signal may be the same as a frequency of the downlink RS or may be part of the frequency of the downlink RS.

Then, the base station 10 transmits a downlink RS (S2). The mobile station 20 relays the downlink RS to a transmission circuit and transmits (non-regeneratively relays) the downlink RS via the transmission circuit using the resource provided by the base station 10 (S3). The mobile station 20 also transmits an uplink RS for uplink channel estimation. The base station 10 receives the downlink RS relayed by the mobile station 20 and estimates a round-trip channel matrix. The base station 10 further receives the uplink RS transmitted by the mobile station 20, estimates an uplink channel matrix, and estimates a downlink channel based on the round-trip channel matrix and the uplink channel matrix.

The mobile station 20 may extract the downlink RS from a received signal based on the information provided by the base station 10 and relay the downlink RS. Alternatively, the mobile station 20 may relay a received signal as it is without extracting the downlink RS using the resource provided by the base station 10. For example, the mobile station 20 may merely relay the received signal (including the downlink RS) in a frequency provided by the base station 10, and then the base station 10 may extract the downlink RS from the relayed signal.

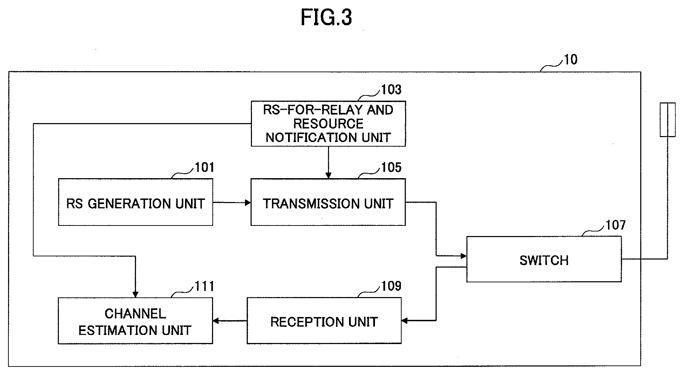

Fig. 3 shows a block diagram of a base station 10 in accordance with an embodiment of the present invention. The base station 10 includes an RS generation unit 101, an RS-for-relay and resource notification unit 103, a transmission unit 105, a switch 107, a reception unit 109, and a channel estimation unit 111.

The RS generation unit 101 generates a downlink RS to be transmitted to a mobile station. For example, the RS generation unit 101 generates a reference signal for measurement of channel state information (CSI-RS: Reference Signal for CSI measurement).

The RS-for-relay and resource notification unit 103 notifies the mobile station of information about a downlink RS to be relayed by the mobile station and a resource to be used by the mobile station to relay the signal. The resource to be used by the mobile station to relay the signal includes a transmission timing (subframe), a frequency position, a multiplex position (a position where the signal is multiplexed) in a subframe, transmission power, or the like. In order to notify the mobile station of this information, control signaling (herein referred to as "signaling for relay" ) may be defined in the system. Signaling for relay may be performed on an upper layer such as an RRC (Radio Resource Control) layer or a lower layer such as an MAC (Medium Access Control) layer. By using the upper layer (or the combination of the upper layer and the lower layer), in particular, it is possible to transmit signaling for relay only if needed, and thus signaling overhead can be reduced. It should be noted that information used to relay the downlink RS may be included not only in the signaling for relay but also in any other signaling.

For example, the RS-for-relay and resource notification unit 103 notifies the mobile station of at least one of the following information items using the signaling for relay. The details are given below.

(1) Information about a downlink RS to be relayed;
(2) A transmission timing (subframe) to be used to relay a downlink RS;
(3) A frequency position to be used to relay a downlink RS;
(4) A position where a downlink RS is multiplexed in a subframe;
(5) Transmission power to be used to relay a downlink RS; and
(6) The number of past TTIs (Transmission Time Intervals) associated with a downlink RS to be relayed by a mobile station among downlink RSs received by the mobile station.

The transmission unit 105 transmits, via the switch 107, the signaling for relay and the downlink RS to the mobile station. It should be noted that the switch 107 is a component to switch between transmission and reception of a signal in a TDD system.

The reception unit 109 receives, via the switch 107, the downlink RS relayed by the mobile station. The reception unit 109 also receives, via the switch 107, an uplink RS transmitted by the mobile station.

The channel estimation unit 111 estimates a round-trip channel matrix $H_{round}$ based on the received downlink RS. When the mobile station relays a received signal as it is without extracting the downlink RS, the channel estimation unit 111 extracts the downlink RS from the signal relayed by the mobile station by referring to the RS-for-relay and resource notification unit 103 and estimates a round-trip channel matrix $H_{round}$. The channel estimation unit 111 also estimates an uplink channel matrix $H_{UL}$ based on the received uplink RS. Then, the channel estimation unit 111 estimates a downlink channel according to the following equation.

[Equation 2]

$$\hat{\mathbf{H}}_{DL} = \hat{\mathbf{H}}_{UL}^{-1} \hat{\mathbf{H}}_{round}$$

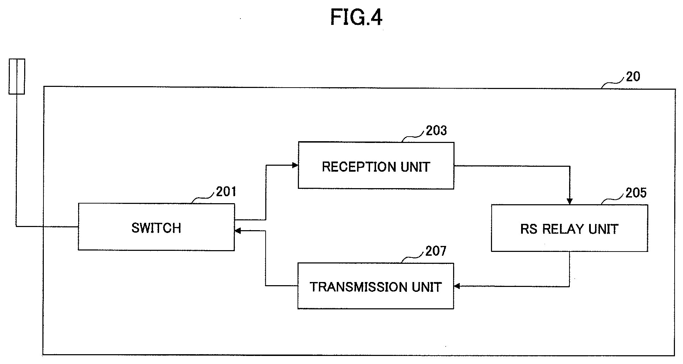

Fig. 4 shows a block diagram of a mobile station 20 in accordance with an embodiment of the present invention. The mobile station 20 includes a switch 201, a reception unit 203, an RS relay unit 205, and a transmission unit 207.

The reception unit 203 receives, via the switch 201, signaling for relay from a base station. The reception unit 203 receives, via the switch 201, a downlink RS from the base station. It should be noted that the switch 201 is a component to switch between transmission and reception of a signal in a TDD system.

The RS relay unit 205 relays the downlink RS to be relayed to the transmission unit 207 based on the signaling for relay provided by the base station.

The transmission unit 207 transmits (non-generatively relays), via the switch 201, the relayed downlink RS to the base station based on the signaling for relay provided by the base station.

<Details of signaling for relay>

Next, information provided from the RS-for-relay and resource notification unit 103 in the base station 10 to the mobile station 20 using the signaling for relay is described below in detail.

(1) Information about a downlink RS to be relayed

A downlink RS to be relayed may be a newly-defined reference signal or an existing reference signal (for example, CSI-RS). Since the base station can recognize which signal is to be relayed, any signal other than the downlink RS may be used for a signal to be relayed.

For example, a reference signal may be newly defined in order to support extension of the number of antennas, extension of a transmission timing/frequency, extension of allocation of a transmission sequence, or the like. The reference signal may be defined based on the number of antenna ports, a reference signal sequence (for example, a sequence number of a Zadoff-Chu sequence used for the reference signal), a multiplex position in a time/frequency direction (for example, a subframe position where the reference signal is multiplexed or frequency hopping to reduce a transmission band of the reference signal), transmission power information, or the like.

Alternatively, an existing reference signal (for example, CSI-RS) may be used in consideration of effects on the existing specifications. By using a CSI-RS defined for CSI estimation, in particular, it is possible to reduce degradation in performance of a mobile station in conformity with 3GPP standardization, Release 10 or 11, while achieving channel estimation with eight antennas at a maximum. In this example, a CSI-RS resource number (CSI-RS resource) which is defined in the existing specifications for CSI calculation may be included in the signaling for relay, for example. Alternatively, a flag indicating whether a signal is a downlink RS to be relayed may be included in RRC signaling (CSI-RS-Config or CSI-RS-Config(NZP)) for notification of the number of antenna ports for CSI-RS or a multiplex position in a time/frequency direction, for example.

Alternatively, a reference signal such as a CRS (Cell-Specific Reference Signal) or a DM-RS (Demodulation Reference Signal) may be used. What kind of reference signal is used may be provided using the signaling for relay or determined in advance in the system.

It should be noted that a single downlink RS may be relayed or a plurality of downlink RSs may be relayed. For example, both a newly-defined reference signal and a CSI-RS may be relayed by the mobile station.

(2) A transmission timing (subframe) to be used to relay the downlink RS

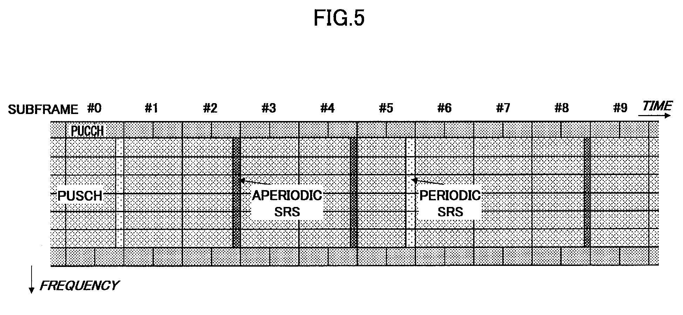

A transmission timing to be used by a mobile station to relay a downlink RS may be periodic or aperiodic. For example, an SRS (Periodic SRS) which is periodically transmitted and an SRS (Aperiodic SRS) which is aperiodically transmitted are defined as shown in Fig. 5. The Periodic SRS is an SRS to be transmitted at a predetermined transmission period and the Aperiodic SRS is an SRS to be transmitted with a trigger from a base station. A transmission timing to be used by a mobile station to relay a downlink RS may be determined based on the transmission timing of either of the SRSs.

For example, a periodic transmission timing may be used in order to reduce signaling overhead. In order to specify a periodic transmission timing, a transmission period and a transmission start position (offset) may be included in the signaling for relay, for example. Alternatively, the transmission timing may be the same as the transmission timing of the Periodic SRS (possibly with an offset). This can further reduce signaling overhead. The transmission period may be the same as the transmission period of the Periodic SRS or may be determined by thinning out the transmission timings of the Periodic SRS. Alternatively, part of the TTIs (Transmission Time Intervals) allocated to the Periodic SRS may be used for transmission of the downlink RS.

Alternatively, an aperiodic transmission timing may be used in order to efficiently allocate a resource by relaying a downlink RS only when needed. An aperiodic transmission timing may be triggered by a base station via a control channel (PDCCH/ePDCCH). The transmission timing may be provided together with control information (DCI: Downlink Control Information) about the Aperiodic SRS. For example, two bits may be used to identify the case where the Aperiodic SRS is not transmitted and the downlink RS is not relayed (00), the case where the Aperiodic SRS is transmitted (10 or 01), or the case where the downlink RS is relayed (11). In addition, the transmission timing of the Aperiodic SRS and the transmission timing of the downlink RS may be provided at the same time in order to further reduce the number of bits for signaling. For example, one bit may be used to identify the case where neither the Aperiodic SRS nor the downlink RS is transmitted (0) or the case where both the Aperiodic SRS and the downlink RS are transmitted (1). In the latter case, the Aperiodic SRS may be transmitted after a lapse of four TTIs since a notification from the base station, and then the downlink RS may be transmitted after a lapse of five TTIs, for example.

In addition, a transmission timing may be associated with a reception timing of the downlink RS in order to reduce signaling overhead. For example, the downlink RS may be relayed after a predetermined subframe interval since the reception timing of the downlink RS. The predetermined subframe interval may be determined in advance in the system or may be provided to a mobile station with the signaling for relay.

(3) A frequency position to be used to relay a downlink RS

It is not desirable for a mobile station to non-regeneratively relay downlink RSs in a whole system band from the viewpoint of resource usage in the system or power consumption in the mobile station. Thus, a frequency position to be used by a mobile station to relay a downlink RS may be provided using the signaling for relay.

For example, when a downlink RS is transmitted in a system band of forty resource blocks, the forty resource blocks may be divided into two sets of twenty resource blocks, and the twenty resource blocks may be further divided into five sets of four resource blocks. Then, the number of resource blocks to be used to relay the downlink RS may be specified in view of resource usage. For example, when a downlink RS included in four resource blocks is relayed, frequency hopping may be applied to change a frequency position in the system band at each transmission timing.

Alternatively, the relationship between the frequency position of the downlink RS and the frequency position of the Aperiodic SRS may be provided. For example, when the downlink RS is relayed in a TTI subsequent to the Aperiodic SRS, the frequency position of the downlink RS may be the same as the frequency position of the Aperiodic SRS.

(4) A position where a downlink RS is multiplexed in a subframe

A downlink RS may be placed in a region (the last symbol in a resource block in the time direction) for an SRS (Sounding Reference Signal) shown in Fig. 5, in consideration of effects on existing mobile stations. For example, when a transmission timing of an SRS is the same as a relay timing of a downlink RS, a priority may be defined in advance or may be provided using the signaling for relay.

Alternatively, a downlink RS may be placed in a whole or partial region for a PUSCH (Physical Uplink Shared Channel) or a DM-RS. When many resources are needed to transmit the downlink RS, in particular, a whole region for the PUSCH, a whole region for the DM-RS, or a whole region for both the PUSCH and the DM-RS in a certain TTI may be allocated for transmission of the downlink RS. In order to notify a mobile station of a position where the downlink RS is multiplexed (which symbol among fourteen symbols is used for the downlink RS), a bit indicating the multiplex position may be included in the signaling for relay. Alternatively, the signaling bit may be reduced by associating an identifier of a mobile station such as a UE-ID with the multiplex position (by using modulo arithmetic, for example).

(5) Transmission power to be used to relay a downlink RS

Transmission power to be used to relay a downlink RS may be controlled based on transmission power of an existing signal. For example, it is understood that a downlink RS has commonalities with an SRS in terms of transmission power control because the downlink RS is used for sounding. For this reason, transmission power of an SRS may be used for transmission power of a downlink RS. Alternatively, an offset from transmission power of an SRS may be statically or dynamically provided.

The reference used for transmission power control is not limited to an SRS, but transmission power may be controlled based on a PUSCH or a PUCCH (Physical Uplink Control Channel). For example, transmission power of the PUSCH or the PUCCH with or without an offset or the like may be used for transmission power of a downlink RS.

Alternatively, transmission power to be used to relay a downlink RS may be controlled based on reception power of the downlink RS. For example, predetermined amplification may be applied to the downlink reception power. In this manner, a fluctuation of path loss in a link can be grasped. It should be noted that the amount of amplification may be statically or dynamically controlled.

(6) The number of past TTIs (Transmission Time Intervals) associated with a downlink RS to be relayed by a mobile station among downlink RSs received by the mobile station

A mobile station stores a downlink RS in a buffer and transmits the downlink RS at a specified transmission timing. In this case, the mobile station may transmit a downlink RS received before more than a predetermined time interval in consideration of delay in control in the mobile station. For example, the mobile station may relay a downlink RS which is received most recently among downlink RSs which have been received before four TTIs or more of a specified transmission timing.

Alternatively, a shorter delay in control than CSI feedback may be specified, because a mobile station merely non-regeneratively relays a signal. For example, the mobile station may relay a downlink RS which is received most recently among downlink RSs which have been received before one TTI or more of a specified transmission timing.

In a TDD system, a special subframe is defined in which both a downlink signal and an uplink signal can be transmitted at the same time. Using this subframe, downlink RSs may be transmitted and relayed in the same subframe.

<Effects of embodiments of the present invention>

According to an embodiment of the present invention, it is possible to implement efficient signaling to estimate a downlink channel matrix in a base station.

For example, using a CSI-RS as the existing reference signal, signaling overhead can be reduced while effects on the existing specifications can be reduced. In addition, signaling overhead can be reduced by using signaling defined for the CSI-RS or the like to notify a mobile station of a resource to be used to relay a downlink RS.

The present invention is not limited to a Massive MIMO system but can be applied to any TDD-based MIMO system. In addition, while the embodiments are described with reference to the case where a downlink RS is relayed by a mobile station, the present invention can be also applied to the case where an uplink RS is relayed by a base station. Thus, the present invention can be generally applied to any radio communication apparatus in a TDD system.

For convenience of explanation, the base station and the mobile station according to the embodiments of the present invention have been described with reference to functional block diagrams, but the base station and the mobile station may be implemented in hardware, software, or combinations thereof. In addition, two or more functional elements may be combined as appropriate. The method according to the embodiments of the present invention has been described with reference to flowcharts, but the method may be carried out in a different order from the order shown in the embodiments.

While the approaches to implement efficient signaling to estimate a round-trip channel matrix in a base station are described above, the present invention is not limited to the embodiments, but various modifications and applications can be made by those skilled in the art within the scope of the claims.

The present international application is based on and claims the benefit of priority of Japanese Patent Application No. 2013-200607 filed on September 26, 2013, the entire contents of which are hereby incorporated by reference.

[DESCRIPTION OF NOTATIONS]

10 base station
101 RS generation unit
103 RS-for-relay and resource notification unit
105 transmission unit
107 switch
109 reception unit
111 channel estimation unit

20 mobile station
201 switch
203 reception unit
205 RS relay unit
207 transmission unit

**Claims**

1. A radio communication apparatus in a TDD (Time Division Duplex) system, comprising:

    a notification unit configured to notify a destination radio communication apparatus of information about a signal to be relayed by the destination radio communication apparatus and a resource to be used by the destination radio communication apparatus to relay the signal;
    a transmission unit configured to transmit the signal to be relayed by the destination communication apparatus;
    a reception unit configured to receive the signal relayed by the destination communication apparatus; and
    a channel estimation unit configured to estimate a channel based on the signal relayed by the destination communication apparatus.

2. The radio communication apparatus as claimed in claim 1, wherein the notification unit notifies the destination radio communication apparatus of a downlink reference signal as the signal to be relayed by the destination radio communication apparatus.

3. The radio communication apparatus as claimed in claim 1, wherein the notification unit notifies the destination radio communication apparatus of a transmission timing to be used by the destination radio communication apparatus to relay the signal based on a transmission timing of a sounding reference signal which is periodically or aperiodically transmitted.

4. The radio communication apparatus as claimed in claim 1, wherein the notification unit notifies the destination radio communication apparatus of a frequency position to be used by the destination radio communication apparatus to relay the signal in a system band.

5. The radio communication apparatus as claimed in claim 1, wherein the notification unit notifies the destination radio communication apparatus of a position in a subframe where the signal to be relayed by the destination radio communication apparatus is multiplexed.

6. The radio communication apparatus as claimed in claim 1, wherein the notification unit notifies the destination radio communication apparatus of transmission power to be used by the destination radio communication apparatus to relay the signal based on transmission power of a sounding reference signal.

**7.** A radio communication apparatus in a TDD (Time Division Duplex) system, comprising:

a reception unit configured to receive information about a signal to be relayed by the radio communication apparatus and a resource to be used by the radio communication apparatus to relay the signal, and to receive the signal to be relayed by the radio communication apparatus;
a relay unit configured to relay the signal to be relayed by the radio communication apparatus to a transmission unit; and
the transmission unit configured to transmit the relayed signal based on the information about the resource to be used by the radio communication apparatus to relay the signal.

**8.** A channel estimation method in a radio communication apparatus in a TDD (Time Division Duplex) system, comprising the steps of:

notifying a destination radio communication apparatus of information about a signal to be relayed by the destination radio communication apparatus and a resource to be used by the destination radio communication apparatus to relay the signal;
transmitting the signal to be relayed by the destination communication apparatus;
receiving the signal relayed by the destination communication apparatus; and
estimating a channel based on the signal relayed by the destination communication apparatus.

**9.** A signal relay method in a radio communication apparatus in a TDD (Time Division Duplex) system, comprising the steps of:

receiving information about a signal to be relayed by the radio communication apparatus and a resource to be used by the radio communication apparatus to relay the signal, and to receive the signal to be relayed by the radio communication apparatus;
relaying the signal to be relayed by the radio communication apparatus to a transmission circuit; and
transmitting, via the transmission circuit, the relayed signal based on the information about the resource to be used by the radio communication apparatus to relay the signal.

FIG.1

# FIG.2

10

SIGNALING FOR NON-REGENERATIVE
RELAY (S1)
DOWNLINK RS (S2)

20

UPLINK RS + DOWNLINK RS
(NON-REGENERATIVE RELAY) (S3)

# FIG.3

# FIG.4

# FIG.5

**INTERNATIONAL SEARCH REPORT**

| International application No. |
| --- |
| PCT/JP2014/071984 |

A. CLASSIFICATION OF SUBJECT MATTER

*H04W72/04*(2009.01)i, *H04B7/04*(2006.01)i, *H04J99/00*(2009.01)i, *H04W28/18*
(2009.01)i, *H04W88/04*(2009.01)i

According to International Patent Classification (IPC) or to both national classification and IPC

B. FIELDS SEARCHED

Minimum documentation searched (classification system followed by classification symbols)
H04W72/04, H04B7/04, H04J99/00, H04W28/18, H04W88/04

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | Hiroki SATO et al., "Study of Carrier Frequency Offset Compensation Scheme for Multi-user MIMO Transmission", IEICE Technical Report, vol.112, no.264, 2012.10, vol.112, no.264, "2. System Model" | 1-9 |
| Y | JP 2012-100332 A (Sharp Corp.), 24 May 2012 (24.05.2012), paragraphs [0087], [0135] to [0153] (Family: none) | 1-9 |
| A | Lang P. Withers et al., Echo-MIMO: A Two-Way Channel Training Method for Matched Cooperative Beamforming, Signal Processing, IEEE Transactions on, 2008.09, Vol. 56, Issue 9 | 1-9 |

☐ Further documents are listed in the continuation of Box C.    ☐ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
| --- | --- |
| Date of the actual completion of the international search<br>    29 September, 2014 (29.09.14) | Date of mailing of the international search report<br>    07 October, 2014 (07.10.14) |
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013200607 A

**Non-patent literature cited in the description**

- **L. WITHERS.** Echo-MIMO: A two-say channel training method for matched cooperative beamforming. *IEEE Trans. Sig, Spt,* 2008